# EUROPÄISCHE PATENTANMELDUNG

(11) **EP 1 075 069 A2**
(43) Veröffentlichungstag der Anmeldung: **07.02.2001**
(21) Anmeldenummer: 00116601.6
(22) Anmeldetag: 01.08.2000
(51) Int. Cl.: H02J 3/26

(54) **Schaltungsanordnung**

(30) Priorität: 05.08.1999 DE 19936873
(71) Anmelder: Louis, Rolf, 66851 Queidersbach (DE); Zoermer, Fritz, 67677 Enkenbach-Alsenborn (DE); Eder, Werner, 67661 Kaiserslautern (DE)
(72) Erfinder: Louis, Rolf, 66851 Queidersbach (DE)
(74) Vertreter: Säger, Manfred, Dipl.-Ing.

(57) **Zusammenfassung**

Die Erfindung betrifft eine Schaltungsanordnung für ein Kabel (1) mit zumindest einer elektrischen Zuleitung (L1,L2,L3) und einem einzigen, kombinierten Leiter (8), der Neutralleiter einerseits sowie Schutzleiter andererseits zusammenfasst, mit einer Messeinrichtung (2) für den gesamten von sowohl der zumindest einen elektrischen Zuleitung (L1,L2,L3) als auch dem kombinierten Leiter (8) geführten Summenstrom, wobei das Ausgangssignal der Messeinrichtung als Ist-Wert an dem Eingang eines Reglers (5) anliegt, und mit einem Sollwertgeber für den Regler, dessen Ausgang ebenfalls an dem Eingang des Reglers anliegt, mit einem Transformator (7), dessen Primärwicklung von dem Ausgang des Reglers ansteuerbar ist und zum Kompensieren des durch die Differenz aus dem in der zumindest einen elektrischen Zuleitung sowie in dem kombinierten Leiter (8) fliessenden Stroms gebildeten Fehlstroms dient und unter Koppelung mit dem magnetischen Kreis des Transformators entweder das Kabel (1) oder den kombinierten Leiter (8) jeweils als Sekundärwicklung umfasst.

## Beschreibung

Die Erfindung betrifft eine Schaltungsanordnung.

In Niederspannungsnetzen ist die am häufigsten installierte Netzform dergestalt, dass ein kombinierter Neutral- sowie Schutzleiter (PEN-Leiter), nachfolgend kurz kombinierter Leiter genannt, in einer einzigen Ader in einem Teil des Netzes zusammengefasst ist. Da an mindestens einer Stelle in diesem Netz der Neutralleiter mit dem Schutzleiter verbunden ist, können sich Neutralleiterströme aufteilen. Ein Teil des Neutralleiterstromes fliesst dann über den kombinierten Leiter zur Erde der Einspeisung. Ein anderer Teil fliesst aber auch über ein vermaschtes Netz von elektrisch leitenden Teilen, die direkt oder indirekt mit dem Schutzleiter in Verbindung stehen. Beispiele solcher elektrisch leitenden Teile sind Wasser-, Heizungs- und Druckluftleitungen, metallische Lüftungskanäle, Gebäudekonstruktionen sowie der Schirm von Datenleitungen. In einem solchen Falle ist der Summenstrom eines Versorgungskabels ungleich null. Die Differenz des Stromes der zumindest einen elektrischen Zuleitung, auch Aussenleiter genannt, und des kombinierten Leiters wird im Folgenden als Fehlstrom bezeichnet. Dessen Höhe hängt von den örtlichen Widerstandsverhältnissen der parasitären Erdverbindungen und dem Widerstand des kombinierten Leiters sowie von der Höhe des Neutralleiterstromes ab.

Bei Verbrauchern mit linearer Stromaufnahme (Motoren, Heizungen, Transformatoren, Glühlampen etc.) und bei ideal angenommener gleichmässiger Verteilung der Verbraucher auf die drei Aussenleiter kompensieren sich die Ströme im Neutralleiter auf nahezu null Ampere. In realen Netzen ist bei dieser Art von Verbrauchern der Neutralleiterstrom auf jeden Fall deutlich kleiner als die Aussenleiterströme.

Bei Verbrauchern mit nichtlinearer Stromaufnahme, das sind in der Regel Netzteile mit kapazitiver Glättung, können sich selbst bei gleichmässiger Verteilung die Ströme im Neutralleiter nicht kompensieren. Netzteile mit kapazitiver Glättung werden fast in allen Geräten mit elektronischen Schaltungen eingesetzt. Nicht selten sind eine grosse Menge von PCs und Energiesparlampen an einer Unterverteilung angeschlossen. Bei dieser Art der Verbraucher ist die dritte Oberschwingung im Aufnahmestrom besonders stark. Im Neutralleiter addieren sich die Ströme der dritten Oberschwingung, sodass infolgedessen dort hohe Ströme fliessen, die nicht selten grösser sind als die Aussenleiterströme und einen ausgeprägten 150 Hz-Anteil aufweisen.

Neben der Tatsache, dass bei dieser Art von Verbrauchern der kombinierte Leiter stark belastet wird, vagabundieren unerwünschte Ströme durch elektrisch leitende Teile, die mit dem Schutzleiter verbunden sind, zur Erde. Nicht selten sind Bildschirmflackern und erhebliche Ausgleichströme auf Schirmen von Datenleitungen negative Folgeerscheinungen, die zu Betriebsstörungen führen können.

Der Erfindung liegt die Aufgabe zu Grunde, den Summenstrom des Kabels oder den aufgrund von Potentialdifferenzen entstehenden Fehlstrom auf nahezu null abzusenken.

Diese Aufgabe wird durch eine Schaltungsanordnung gemäss dem Anspruch 1 gelöst. Zweckmässige Ausgestaltungen und Weiterbildungen der Erfindung sind in den Unteransprüchen gekennzeichnet.

Mit der erfindungsgemässen Schaltungsanordnung wird also der Summenstrom eines Kabels gemessen und an einen Regler abgegeben, der auf eine Abweichung mit einer Ausgangsspannung reagiert, die auf die Primärwicklung eines Transformators abgegeben wird. Entweder der kombinierte Leiter oder das gesamte Kabel wird mit dem magnetischen Kreis, z.B. den Kern des Transformators als Sekundärwicklung gekoppelt, sodass in ihm geringe Spannungen induziert werden können, wodurch der Summenstrom in dem Kabel minimiert, vorzugsweise zu Null geregelt wird.

Dadurch, dass das resultierende Magnetfeld eines Kabels zur Energieübertragung kein Bildschirmflimmern an Monitoren mehr erzeugen kann und dass störende Ströme auf Schirmen von geerdeten Koaxialkabeln oder sonstigen Datenleitungen deutlich reduziert werden, können mit Vorteil Konstruktionselemente von Ausgleichströmen befreit werden. Obwohl die Fehlströme etwas 20 A - 50 A betragen können, ist nur eine geringe Leistung von einigen Watt für die Regelung erforderlich, da nur sehr geringe Spannungen notwendig sind. Die Funktionen des kombinierten Leiters werden durch die Schaltungsanordnung nicht beeinträchtigt. Der kombinierte Leiter wird nicht unterbrochen und es wird keine Elektronik dazu in Reihe geschaltet. Die in dem kombinierten Leiter induzierte Spannung wirkt dem ohmschen Spannungsabfall entgegen. Bei einem Fehler der Regeleinheit kann entsprechend der Sättigung des Transformators nur eine begrenzte Spannung von etwa maximal 0,3 Volt in den kombinierten Leiter induziert werden.

Weitere zweckmässige Ausgestaltungen und Weiterbildungen der Erfindung sind in den Unteransprüchen gekennzeichnet.

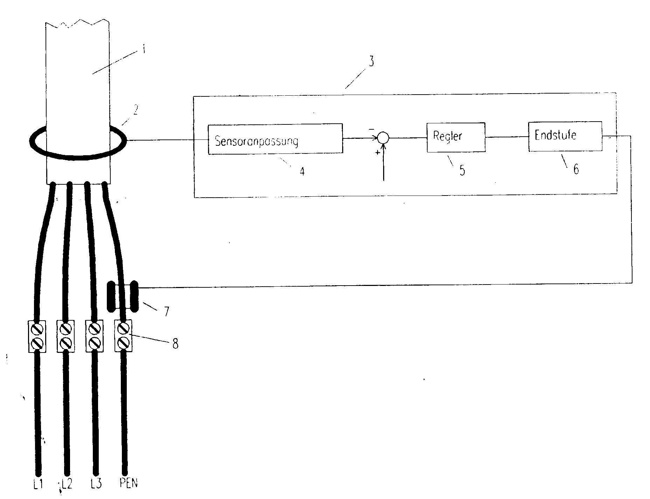

Ein Ausführungsbeispiel der Erfindung wird nachfolgend unter Bezugnahme auf die Zeichnung näher erläutert, die ein schematisches Schaltungsbild darstellt.

Das mit 1 bezeichnete Kabel weist mehrere elektrische Zuleitungen (L1, L2, L3) als Aussenleiter auf. Ferner ist in dem Kabel 1 ein zu einem einzigen Leiter zusammengefasster Neutral- sowie Schutzleiter 8, PEN, vorgesehen, nachfolgend kurz kombinierter Leiter genannt. In dem Kabel 1 wird mittels einer Messeinrichtung 2 der Summenstrom des Kabels 1 ermittelt, das ist der Strom von sowohl der zumindest einen elektrischen Zuleitung L1, L2, L3 als auch dem kombinierten Leiter 8.

Die Messeinrichtung ist an die insgesamt mit 3 bezeichnete Schaltungsanordnung angeschlossen. Die Eingangsseite ist für die Messeinrichtung 2 mit einer Anpassungsschaltung 4 versehen, deren Ausgang mit dem Eingang eines Reglers 5 verbunden ist, an dem ebenfalls ein Sollwertgeber, vorzugsweise mit einer Sollwertspannung von null Volt anliegt. Dieses als Ist-Wert dienendes Eingangssignal des Reglers 5 wird über eine dem Regler 5 nachgeschalteten Verstärker (6) an die Primärwicklung eines insgesamt mit 7 bezeichneten Transformators angeschlossen. Der magnetische Kreis des Transformators 7 ist mit dem kombinierten Leiter 8 oder dem gesamten Kabel 1 verbunden, so dass dieser gewissermassen als Sekundärwicklung dient und in ihm Spannungen und daraus resultierend eine Spannung induzieret wird.

Die erfindungsgemässe Schaltungsanordnung ist so ausgelegt, dass der in dem kombinierten Leiter induzierte Strom den mit der Messeinrichtung 2 gemessenen Summenstrom gegen null regelt. Als Folge dessen ergibt sich, dass das Kabel 1 nach aussen hin quasi stromlos ist und infolgedessen auch keine störenden Magnetfelder erzeugt. Damit zum Anbringen des Stromsensors 2 oder des Transformators 7 das Kabel 1 nicht unterbrochen werden muß, sind dafür mit Vorteil Bauteile mit getrennten Kernen vorgesehen.

## Patentansprüche

1. Schaltungsanordnung (3) für ein Kabel (1) mit zumindest einer elektrischen Zuleitung (L1, L2, L3,) und einem einzigen, kombinierten Leiter (8), der Neutralleiter einerseits sowie Schutzleiter andererseits zusammenfasst, mit einer Messeinrichtung (2) für den gesamten von sowohl der zumindest einen elektrischen Zuleitung (L1, L2, L3) als auch dem kombinierten Leiter (8) geführten Summenstrom, wobei das Ausgangssignal der Messeinrichtung (2) als Ist-Wert an dem Eingang eines Reglers (5) anliegt, und mit einem Sollwertgeber für den Regler (3), dessen Ausgang ebenfalls an dem Eingang des Reglers (5) anliegt, mit einem Transformator (7), dessen Primärwicklung von dem Ausgang des Reglers (5) ansteuerbar ist und zum Kompensieren des durch die Differenz aus dem in der zumindest einen elektrischen Zuleitung (L1, L2, L3) sowie in dem kombinierten Leiter (8) fliessenden Stroms gebildeten Fehlstroms dient und unter Koppelung mit dem magnetischen Kreis des Transformators (7) entweder das Kabel (1) oder den kombinierten Leiter (8) jeweils als Sekundärwicklung umfasst.

2. Anordnung nach Anspruch 1, dadurch gekennzeichnet, dass zwischen dem Regler (5) und dem Transformator (7) ein Verstärker (6) angeordnet ist.

3. Anordnung nach Anspruch 1 oder 2, dadurch gekennzeichnet, dass die Messeinrichtung (2) für den Summenstrom als Stromsensor ausgebildet ist.

4. Anordnung nach Anspruch 3, dadurch gekennzeichnet, dass der Stromsensor eine Induktionsmessschleife (2) aufweist, durch die das Kabel (1) geführt ist.

5. Anordnung nach einem der Ansprüche 1 - 4, dadurch gekennzeichnet, dass die Messeinrichtung (2) über eine Anpassschaltung (4) an den Regler angeschlossen ist.

6. Anordnung nach einem der Ansprüche 1 - 5, dadurch gekennzeichnet, dass der Sollwertgeber ein Ausgangssignal von Null Volt abgibt.
